# EUROPEAN PATENT APPLICATION

(11) **EP 4 502 974 A1**
(43) Date of publication of application: **05.02.2025**
(21) Application number: 23189072.4
(22) Date of filing: 01.08.2023
(51) Int. Cl.: G07F 13/00, G06Q 30/06, B67D 7/00

(54) **CONTROLLING REFUELING OPERATIONS AT A FILLING STATION**

(71) Applicant: ryd GmbH, 80339 München (DE)
(72) Inventor: Geiser, Christoph, 80339 München (DE); Malek, Moni, 80339 München (DE)
(74) Representative: Keller Schneider Patentanwaltsgesellschaft mbH

(57) **Abstract**

A computer-implemented method executed by one or more servers (22, 26.x) for controlling a refueling operation at a filling station (12) comprises determining that the particular vehicle (10.2) approaches the filling station (12), designating a particular fuel pump (14.2) of a plurality of fuel pumps (14.x) of the filling station (12) for use in refueling the particular vehicle (10.2), blocking the particular fuel pump (14.2) from initiating any refueling operation, determining that the particular vehicle (10.2) is ready for a refueling operation, and activating the particular fuel pump (14.2) for the refueling operation. One or more machine-readable media, a server installation (28) and a system are adapted to perform corresponding operations or cause corresponding operations to be performed.

## Description

### FIELD OF THE INVENTION

The present invention relates to the field of automotive fueling systems, and in particular the field of controlling refueling operations at a filling station.

### BACKGROUND OF THE INVENTION

Refueling vehicles at filling stations is a necessity which should be performed as efficiently as possible. Customers do not wish to wait at filling stations longer than necessary. Similarly, the owners and/or operators of filling stations wish to serve as many vehicles as possible for a given number of fuel pumps and a given amount of time. Accordingly, a need exists to minimize waiting times and/or maximize the throughput of a filling station.

A particular issue is the time it takes for a customer to complete the payment process. In many countries, it is usual practice to first fill the vehicle and then go to a point-of-sale system in a store building of the filling station to pay for the fuel. During the entire payment process, the vehicle remains at a fuel pump and blocks this fuel pump for use by other customers. A need exists to reduce the time needed for the payment process, preferably making the payment process as seamless and minimalistic as possible

EP 3 051 478 A1 discloses a technique for increasing the throughput of filling stations. According to an example, a vehicle transmits location information and at least one of a vehicle identification and user identification to a server. The server determines, based on the received location information, that the vehicle is at a filling station. A fuel pump activation command is sent to the filling station, causing the filling station to activate an available fuel pump for a filling operation. After the refueling operation, the server may automatically process payment based on the received identification.

The above-described example disclosed in EP 3 051 478 A1 allows immediate payment without the need for the customer to leave the fuel pump and go to a point-of-sale system. However, in order to avoid charging the wrong customer for fuel, it must be ensured that the identified vehicle is indeed the one refueled at the identified fuel pump. In the system of EP 3 051 478 A1, this may require a very accurate determination of the vehicle's location, which is not always practicable. Alternatively, as also disclosed in EP 3 051 478 A1, the vehicle's license plate may be read at the fuel pump. However, reading the vehicle's license plate may require additional hardware and/or software, and may not work in adverse lighting conditions.

### OBJECTS AND SUMMARY OF THE INVENTION

It is an object of the present invention to provide an economical way of controlling a refueling operation at a filling station which correctly identifies the refueled vehicle with a high degree of reliability.

The present invention is defined by the independent claims. The dependent claims concern optional features of some embodiments of the invention. Due account shall be taken of any element which is equivalent to an element specified in the claims.

The present invention is based on the surprising finding that the overall throughput of the filling station can be increased by judiciously blocking a particular fuel pump from initiating any refueling operation during a certain time interval. More in detail, after it has been determined that a particular vehicle approaches the filling station, the particular fuel pump is designated, by one or more servers, for use in refueling the particular vehicle, and the particular fuel pump is blocked from initiating any refueling operation until the time it is determined that the particular vehicle is ready for a refueling operation. This blocking ensures that the particular vehicle can indeed use the particular fuel pump, thus facilitating the correct association between fuel pumps and vehicles. The correct association in turn facilitates, in some embodiments, a seamless fueling procedure and an automatic and rapid payment process with a low error rate.

The order in which the operations and method steps are recited in the claims should not be construed as limiting, unless it is specified otherwise in the claims. It is apparent that many of these operations and method steps can be performed in a different order or wholly or partially parallel or wholly or partially interleaved with each other.

The machine-readable medium according to the present disclosure may comprise suitable program instructions to realize the recited operations, for example on a general-purpose computer, or on a device comprising a processor, or in a programmable integrated circuit. The machine-readable medium may be any kind of transitory or non-transitory data carrier like, for example, a hard disk, or an optical data carrier, or a semiconductor memory, or a signal transmitted via a carrier wave over a computer network. In some embodiments, the machine-readable medium is a tangible and/or non-transitory data carrier, which excludes carrier waves.

### BRIEF DESCRIPTION OF THE DRAWINGS

Further features, objects and advantages of the invention will become apparent from the following detailed description, in connection with the annexed schematic drawings, in which:
Fig. 1 shows a schematic representation of a filling station and a server installation with multiple vehicles, according to embodiments of the present invention.
Fig. 2 shows a schematic representation of a vehicle, an on-board unit and further elements according to an embodiment of the present invention.
Fig. 3 shows a schematic flow diagram of operations according to embodiments of the present invention.

### DETAILED DESCRIPTION OF EMBODIMENTS OF THE INVENTION

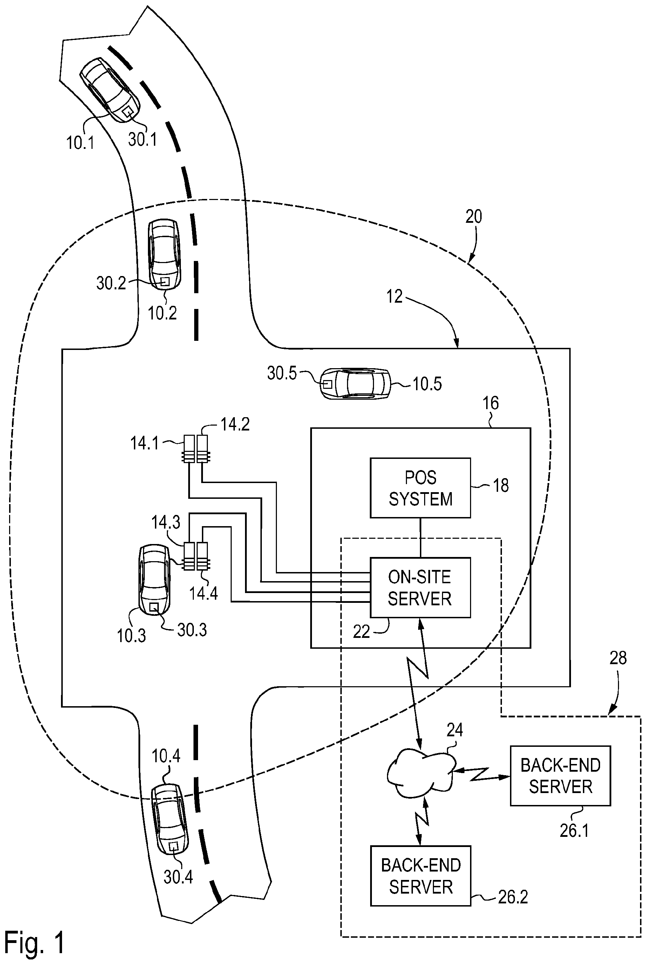

Fig. 1 shows vehicles 10.1, 10.2, 10.3, 10.4 and 10.5, which will also be designated as vehicles 10.x in the present document, at various positions in or close to a filling station 12. Each of the vehicles 10.x may be any kind of private or commercial vehicle, such as a car or a bus or a truck. The filling station 12 has a plurality of fuel pumps, which will be designated as fuel pumps 14.x in the present document. Fig. 1 exemplarily shows four (4) fuel pumps 14.1, 14.2, 14.3 and 14.4, but it is apparent that the invention encompasses filling stations 12 with any number of fuel pumps 14.x. A store building 16 of the filling station 12 houses the usual facilities, including a point-of-sale system 18 such as a cash register which allows cash payment and additionally has a terminal for several kinds of card payment.

As shown in Fig. 1, the vehicle 10.1 approaches, but is still outside of, a geo-fence 20 associated with the filling station 12. The vehicle 10.2 has just entered the geo-fence 20 and approaches the fuel pumps 14.x. The vehicle 10.3 stands next to the fuel pump 14.3 and is currently engaged in a filling operation. The vehicle 10.4 has completed its filling operation and is just leaving the filling station 12. The vehicle 10.5 is parked next to the store building 16.

The fuel pumps 14.x are connected to, and communicate with, an on-site server 22. The on-site server 22 includes a commonly known forecourt controller for controlling operation of the fuel pumps 14.x and for receiving various kinds of information from the fuel pumps 14.x. The on-site server 22 is also connected to the point-of-sale system 18. Yet further, the on-site server 22 communicates, via any combination of wired and wireless networks 24, with one or more back-end servers, which will generally be designated as back-end servers 26.x in the present document. The non-limiting example in Fig. 1 shows two back-end servers 26.1, 26.2, but it is apparent that any number of back-end servers 26.x, including a single back-end server, can be used. In the case of multiple back-end servers 26.x, at least some of them may be operated at different locations and/or by different entities. For example, the back-end server 26.1 may be associated with a manufacturer of a vehicle 10.x to provide information about the current position of the vehicle 10.x, and the back-end server 26.2 may be operated by a company offering a seamless fueling experience to its customers.

Generally speaking, the distribution of functions between the on-site server 22 and the one or more back-end servers 26.x, and likewise the distribution of functions between multiple back-end servers 26.x, may be chosen according to technical and/or administrative and/or legal requirements. The present invention is not limited to any particular distribution of these functions, unless specified otherwise in the claims. The totality of the servers performing the functions of the present invention, which may include the on-site server 22 and/or the one or more back-end servers 26.x, will be referred to as a server installation 28 in the present document.

Fig. 1 further shows a plurality of on-board units 30.1, 30.2, 30.3, 30.4, 30.5, which will be referred to as on-board units 30.x in the present document. Each of the on-board units 30.x is installed or incorporated or at least located in a respective one of the vehicles 10.x. Each on-board unit 30.x provides, to the server installation 28, certain kinds of information regarding the operational status and/or location of the respective vehicle 10.x. In particular, the on-board unit 30.x is adapted to provide information which states, of from which it can be concluded, that the vehicle 10.x associated with the on-board unit 30.x is ready for a refueling operation. This information may be packaged in a refueling-ready message.

In some embodiments, the refueling-ready message provided by the on-board unit 30.x consists of, or comprises, an indication that the ignition of the vehicle 10.x has just been turned off. This indication may correspond to, for example, an event of turning off the ignition of the vehicle 10.x, or a status that the ignition has been turned off within a predefined time interval such as the previous two seconds, the previous second, or similar. In other embodiments, the on-board unit 30.x repeatedly transmits the current ignition status of the vehicle 10.x to the server installation 28, and the server installation 28 may conclude that the vehicle 10.x is ready to be refueled if the ignition status changes from "on" to "off'.

In further particularly simple embodiments, the information that the vehicle 10.x is ready for a refueling operation may be determined from the current speed or a sequence of locations of the vehicle 10.x. For example, the on-board unit 30.x may send a refueling-ready message if it determines that the vehicle 10.x comes to a full stop, or if it determines that the current location of the vehicle 10.x has remained unchanged for some time. Alternatively, the on-board unit 30.x may send information regarding the current speed and/or the current location of the vehicle 10.x to the server installation 28, and the server installation 28 may determine the refueling-ready status therefrom.

In many embodiments, the on-board unit 30.x is adapted to determine additional information about the vehicle 10.x, such as, without limitation, an indication of the approximate amount of fuel in the tank (e.g., 30 liters), or an indication of a degree to which the tank is full (e.g., 50% full), or at least an indication whether the fuel level has recently increased.

The server installation 28 is further aware of the identity of the vehicle 10.x and/or its driver and/or a passenger. In many embodiments, the on-board unit 30.x transmits identifying information to the server installation 28. For example and without limitation, this information may identify one or more of the on-board unit 30.x (e.g., a serial number of the on-board unit 30.x), the vehicle 10.x (e.g., a vehicle identification number VIN of the vehicle 10.x), or a person associated with the vehicle 10.x (e.g., a person who has registered with a company providing a seamless fueling experience).

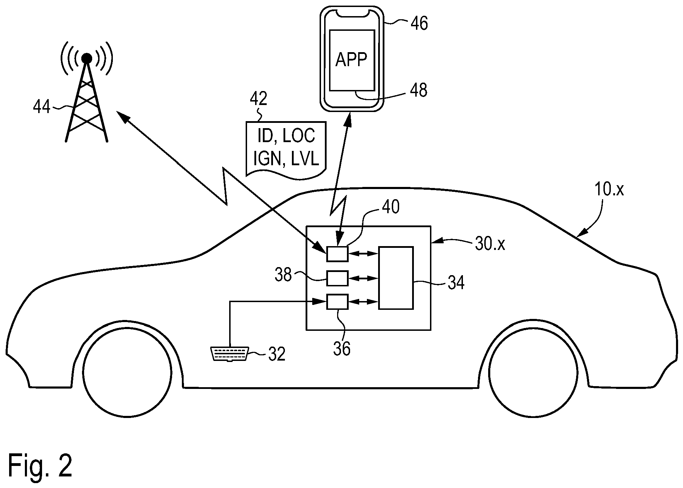

The on-board unit 30.x may be any unit comprising hardware and/or software. For example, the on-board unit 30.x may be a software component operating in a computer unit of the vehicle 10.x, wherein the computer unit may be part of a control system or an entertainment system or a navigation system or a user interface system of the vehicle 10.x. As another example, the on-board unit 30.x may be a dedicated device comprising computer hardware and software. The device may be firmly installed within the vehicle 10.x or may be plugged into a diagnosis port of the vehicle 10.x. A more detailed description of the latter possibility will be given below in connection with Fig. 2. As yet another example, the on-board unit 30.x may be a software program ("app") executed by a mobile device (such as a mobile telephone or a smartphone or a smartwatch) of a driver of the vehicle 10.x or a passenger.

The on-board unit 30.x may communicate and interact with further components of or located within the vehicle 10.x. For example, in embodiments in which the on-board unit 30.x is integrated with or installed in the vehicle 10.x, the on-board unit 30.x may make use of a mobile communication interface of a mobile device (such as a mobile telephone or a similar device) of a driver of the vehicle 10.x or a passenger, and exchange data with this mobile device. Conversely, in embodiments in which the on-board unit 30.x is implemented external to the vehicle 10.x, the on-board unit 30.x may communicate with elements of the vehicle 10.x, such as a vehicle control system.

In embodiments in which the on-board unit 30.x is adapted to obtain location data of the vehicle 10.x, the location data may be determined using a global navigation satellite system (GNSS), such as one of the systems commonly known as GPS or GLONASS or Galileo or BeiDou. However, embodiments are also envisaged in which the on-board unit 30.x or a device interfacing with the on-board unit 30.x determines the location data using cell data of a cellular communication network such as, for example, a 4G or 5G or higher network.

Fig. 2 shows an example of a vehicle 10.x having an on-board unit 30.x which is configured as a compact hardware device ("dongle") plugged into a control or diagnosis port 32 of the vehicle 10, such as an OBD, OBD2, or EOBD port. In the embodiment shown in Fig. 2, the on-board unit 30.x comprises a control unit 34 including the usual elements of an embedded computer, an interface unit 36 connected to the port 32, a GNSS receiver 38, and a wireless communication unit 40. In some embodiments, the wireless communication unit 40 may be adapted for wide-range wireless communication via a mobile telecommunication network, which is represented by a cellular base station 44 in Fig. 2. Alternatively or additionally, the wireless communication unit 40 may be adapted for short-range wireless communication via a communication protocol such as Bluetooth^{™}. Fig. 2 shows a mobile device 46 (such as a smartphone or a smartwatch of a driver of the vehicle 10.x or a passenger) as a station in the short-range communication. However, the short-range communication may also take place between the on-board unit 30.x and another component of the vehicle 10.x, such as a control system or navigation system of the vehicle 10.x.

The wireless communication unit 40 is adapted to send various kinds of messages, including the message 42 which is shown as a non-limiting example in Fig. 2. As shown in Fig. 2, the message 42 comprises different pieces of information, namely identifying information ID which uniquely identifies the vehicle 10.x or the on-board unit 30.x or a user of the on-board unit 30.x, location information LOC stating the current location of the vehicle 10.x in geographical coordinates, ignition information IGN which states whether the ignition of the vehicle 10.x is currently switched on or off, and fuel level information LVL which indicates an amount of fuel available in a tank of the vehicle 10.x. It is apparent that further or different or fewer pieces of information may be present in other messages and/or other embodiments.

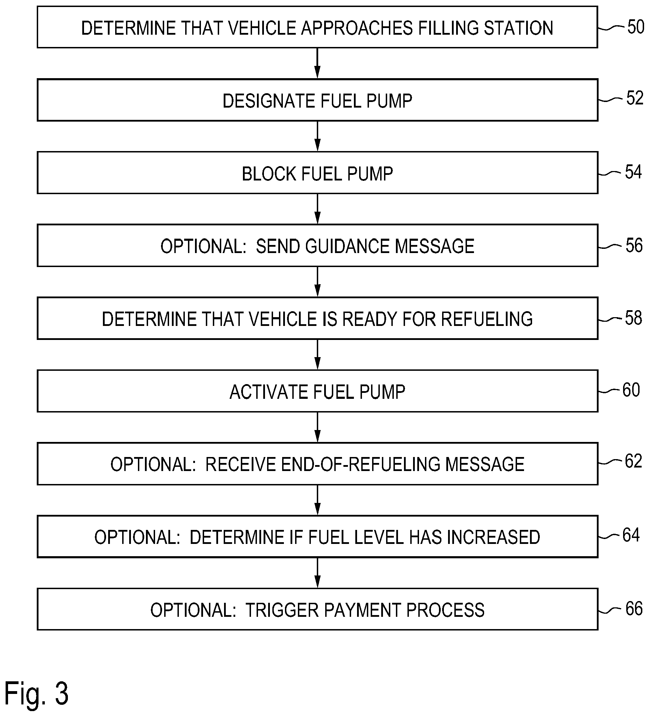

Fig. 3 shows an example process with operations that are primarily performed by the server installation 28, based on information received from the on-board units 30.x and/or further devices such as the mobile device 46. The overall process facilitates a seamless operation of refueling a vehicle 10.x, thus increasing the throughput of the filling station 12 and improving the customer's experience.

In step 50, the server installation 12 determines that a particular vehicle - such as the vehicle 10.2 in the example shown in Fig. 3 - approaches the filling station 12. In the presently described embodiment, this determination is based on the geo-fence 20, which is defined around the filling station 12. The vehicle 10.2 has just entered the geo-fence 20, so it is assumed that the vehicle 10.2 approaches the filling station 12. Any device or software component, such as a user application running on the mobile device 46 of the driver of the vehicle 10.2 or a passenger, the server 26.1 associated with a manufacturer of the vehicle 10.2 in the case of a connected car, or the in-vehicle unit 30.2, may process current location data and compare it to the boundaries of the geo-fence 20.

As one of many possible embodiments, a user application 48 running on the mobile device 46 may receive geo-fence data from the server installation 12. The geo-fence data pertains to filling stations in a certain region around the current position of the vehicle 10.x. The geo-fence data is updated as the vehicle 10.x moves, so that the user application 48 only needs to check a limited number of geo-fences (such as the geo-fence 20) at any given time. There are estimated to be about 15.000 filling stations in Germany, so that storing and evaluating geo-fence data for all of them would likely overwhelm the storage and processing capacity of the application 48 and the mobile device 46.

In the presently described embodiment, the application 48 running on the mobile device 46 compares the current location information LOC communicated in the messages 42 with the available geo-fence data and sends, via the mobile device 46, a communication to the server installation 28 that a particular vehicle - in the present case, the vehicle 10.2 identified by its identification data ID - is entering or has just entered the geo-fence 20 associated with the filling station 12. The server installation 28 - for example, the second back-end server 26.2 operated by a company offering a seamless fueling experience to its customers, receives the communication from the mobile device 46 and determines therefrom that the particular vehicle 10.2 approaches the filling station 12. In the terminology used in the present document, this process is referred to as a "determination", even if it may just comprise obtaining the communication from the mobile device 46 and extracting the information sent by the mobile device 46.

In other embodiments, the operations just described as being performed by the mobile device 46 may be performed by different components, including, but not limited to, any combination of the on-board unit 30.x, one of the back-end servers 26.x, the on-site server 22, or any other server. For example, in the case of connected cars, the first back-end server 26.1 operated by the manufacturer of the car may obtain the location information LOC from a proprietary navigation system of the vehicle 10.x, compare it to voluminous geo-fence data, and communicate the results to the second back-end server 26.2 in the form of an indication that the vehicle 10.x has just crossed a particular geo-fence, such as the geo-fence 20.

In response to determining that the particular vehicle 10.2 approaches the filling station 12, the server installation 28 designates, in operation 52, a particular fuel pump - such as the fuel pump 14.2 - which is intended to be used in the refueling operation. This designation may be made, as a non-limiting example, by the on-site server 22, which has access to information about the operational status of all fuel pumps 14.x, in particular whether each fuel pump 14.x is currently pumping fuel or has recently ended pumping fuel. For example, the server installation 28 may designate a fuel pump 14.x which is expected to be presently free, based on the status information that the designated fuel pump 14.x is not currently pumping fuel and any payment operation associated with its most recent refueling operation has ended. Alternatively or additionally, the designation may prefer or exclusively select certain ones of the fuel pumps 14.x, which may be marked as "fast lane" pumps or similar.

After the particular fuel pump 14.2 for the particular vehicle 10.2 has been designated, the server installation 22 - more specifically, the on-site server 22 - in operation 54 blocks this fuel pump 14.2 from initiating any further refueling operation. This blocked operational status may be signaled at the fuel pump 14.2, such as by a message stating "reserved for preferred customer" or similar.

Blocking the particular fuel pump 14.2 from performing a refueling operation has the important benefit of preventing vehicles 10.x other than the particular vehicle 10.2 from obtaining fuel at the particular fuel pump 14.2, thus preventing or reducing the risk that the server installation 28 will regard an incorrect vehicle as the particular vehicle 10.2. For example, it is conceivable in the situation shown in Fig. 1 that the vehicle 10.5 has just started moving and cuts in before the particular vehicle 10.2, reaching the particular fuel pump 14.2 before the particular vehicle 10.2 does. If the particular fuel pump 14.2 was not blocked, then the vehicle 10.5 might start a refueling operation, which would contradict the purpose of seamless refueling for the particular vehicle 10.2 and may even lead to the owner of the particular vehicle 10.2 being incorrectly charged for the fuel filled into the tank of the vehicle 10.5.

In the event that the particular vehicle 10.2 chooses not to refuel but instead leaves the geo-fence 20, the event of the vehicle 10.2 leaving the geo-fence 20 then is communicated to at least one of the back-end servers 26.x and from there to the on-site server 22. The on-site server 22 then in turn unblocks the designated fuel pump 14.x so it is available again for all other users at the filling station 12. A similar unblocking also takes place in response to certain other events, such as a time-out after the particular vehicle 10.2 has first been detected entering the geo-fence 20 and has not commenced any refueling operation.

In many but not all embodiments, the server installation 28 further sends a guidance message to the particular vehicle 10.2; please see operation 56 in Fig. 3. The guidance message causes the driver of the particular vehicle 10.2 to be notified which fuel pump 14.x - namely the particular fuel pump 14.2 - should be used for the refilling operation. In embodiments which involve the user application 48 running on the mobile device 46, the notification may be shown at, or spoken by, the mobile device 46. Alternatively or additionally, in embodiments in which the server installation 28 has access to an entertainment system or a navigation system of the particular vehicle 10.2, the notification may be displayed on a screen of the particular vehicle 10.2, or spoken via a sound system of the particular vehicle 10.2. A route to the particular fuel pump 14.2 may be shown on a map display. Furthermore, vehicles 10.x having a sufficient degree of self-driving capabilities may be directed to drive automatically or semi-automatically to the particular fuel pump 14.2. In particularly simple embodiments, the guidance message is send to a mobile device of a user in any known manner, such as in the form of a text message using any kind of messaging service.

The sending of the guidance message in operation 56 is often useful, but may not be required in all embodiments or under all circumstances. For example, in some embodiments the filling station 12 may have a particular fuel pump 14.x which is located in a "fast lane" or be marked by a clearly visible sign. In this case, the server installation 28 will always designate this single fuel pump as the particular fuel pump 14.2 whenever a vehicle 10.x participating in the seamless filling program approaches, and it is not necessary to send a further guidance message identifying the particular fuel pump 14.2 to the customer. In many embodiments, the server installation 28 designates and blocks exactly one particular fuel pump 14.x for each approaching vehicle 10.x. However, embodiments are also conceivable in which more than one particular fuel pump 14.x may be selected and blocked in certain circumstances, thus enabling the driver of a vehicle 30.x entering the geo-fence 20 to use any one of the designated and blocked fuel pumps 14.x. In these embodiments, further means may be used to ensure that the vehicle 30.x using a fuel pump 14.x can be correctly determined.

In step 58 shown in Fig. 3, the server installation 28 determines that the particular vehicle 10.2 is ready for refueling. In embodiments in which the on-board unit 30.2 has access to an internal control bus of the particular vehicle 10.2, this determination may be based on a finding that the ignition of the particular vehicle 10.2 has just been turned off. Alternatively or cumulatively, the determination may be based on a finding that the particular vehicle 10.2 has just come to a standstill, i.e., the current location of the particular vehicle 10.2 remains unchanged for some time. A determination based on the current location of the particular vehicle 10.2 requires less specialized hardware and might even be performed by an on-board unit which is simply implemented as an application running on a usual smartphone or other mobile device.

After it has been determined that the particular vehicle 10.2 is ready for a refueling operation, the server installation 28 activates the particular fuel pump 14.2 for a refilling operation; please see operation 60. A user of the particular vehicle 10.x can now start the refilling operation in the usual manner, i.e., by inserting a nozzle of the particular fuel pump 14.2 into a filler neck of the particular vehicle 10.x and pressing a fuel valve lever. If these operations are performed before the end of a relatively short timeout after detecting the "refueling-ready" condition, it is assumed that the particular vehicle 10.x is indeed being refueled at the particular fuel pump 14.2, and an automatic payment operation (which will be explained below) is enabled. After the end of the timeout, refueling is still possible (because the particular fuel pump 14.2 was activated in operation 60) but no automatic payment is enabled because the risk is regarded as too high that the particular vehicle 10.2 was driven to another place within the filling station 12 and another vehicle - such as the vehicle 10.5 - initiated the refueling operation at the particular fuel pump 14.2.

Fig. 3 shows further operations 62, 64, 66, which are optional and can be performed in any order. First, in operation 62, the server installation 28 receives an end-of-refueling message from the particular fuel pump 14.2, indicating that the nozzle has been put back into a holder of the particular fuel pump 14.2. This message signals the end of the refueling operation and triggers further steps.

Second, it is believed that the operations described so far provide a reasonable degree of security against an incorrect association between the vehicles 10.x and the respective fuel pumps 14.x. However, additional measures can be taken to further decrease the likelihood of a mismatch, which might be caused by an unfortunate timing or combination of events or by attempted fraud.

For example, in certain embodiments the on-board unit 30.x has access to information regarding the fuel level of the respective vehicle 10.x. Fig. 2 shows such an embodiment, in which the fuel level data LVL is included in the messages 42 sent to the server installation 28 and/or the mobile device 46. The fuel level data LVL of the particular vehicle 10.2 can be used as a further criterion to verify that the particular vehicle 10.2 has indeed been filled up at the particular fuel pump 14.2. For example, the server installation 28 may compare the amount of fuel determined by the particular fuel pump 14.2 with an amount of fuel indicated by the fuel level data LVL. In the case of a mismatch which exceeds a certain threshold, it may be assumed that a vehicle 10.x different from the particular vehicle 10.2 has been refilled at the particular fuel pump 14.2. The refueling operation is then treated as a "normal" one, without any automatic payment process.

Similarly, license plate information may be taken into account for verification purposes if such information is available. For example, only some fuel pumps 14.x may be equipped with license plate readers, and/or license plate reading may require favorable lighting conditions and may not work in all circumstances. However, if license plate information is available for some or all vehicles, it can certainly be taken into account as an additional safeguard measure against error and/or fraud. The same pertains to any other available information, such as footage from video surveillance from which certain information about the vehicles (such as make, model, and approximate model year) can be determined by automated image recognition under certain circumstances.

If it is established with a sufficiently high degree of confidence that it was indeed the particular vehicle 10.2 which has been refueled at the particular fuel pump 14.2, then the server installation 28 triggers an automatic payment process in operation 66. In many embodiments, the actual payment process is performed by a third-party payment provider. A confirmation of payment may be shown to a registered user at his or her mobile device (such as the mobile device 46) or by other means. The payment process may also involve obtaining an additional confirmation from the user.

The particulars contained in the above description of sample embodiments should not be construed as limitations of the scope of the invention, but rather as exemplifications of some embodiments thereof. Many variations are possible and are immediately apparent to persons skilled in the arts. In particular, this concerns variations that comprise a combination of features disclosed in the present specification. Accordingly, the scope of the invention should be determined not by the embodiments illustrated, but by the appended claims and their legal equivalents.

### LIST OF REFERENCE SIGNS

- 10.x: vehicle
- 12: filling station
- 14.x: fuel pump
- 16: store building
- 18: point-of-sale system
- 20: geo-fence
- 22: on-site server
- 24: network(s)
- 26.x: back-end server
- 28: server installation
- 30.x: on-board unit
- 32: port
- 34: control unit
- 36: interface unit
- 38: GNNS receiver
- 40: wireless communication unit
- 42: message
- 44: cellular base station
- 46: mobile device
- 48: application
- 50 - 66: operations of the process shown in Fig. 3
- IGN: ignition information
- ID: identifying information
- LOC: location information
- LVL: fuel level information

## Claims

1. A computer-implemented method executed by one or more servers (22, 26.x) for controlling a refueling operation at a filling station (12), the method comprising:
- determining, based on first information received from a particular vehicle (10.2), that the particular vehicle (10.2) approaches the filling station (12),
- in response to said determining that the particular vehicle (10.2) approaches the filling station (12), designating a particular fuel pump (14.2) of a plurality of fuel pumps (14.x) of the filling station (12) for use in refueling the particular vehicle (10.2),
- in response to designating the particular fuel pump (14.2), blocking the particular fuel pump (14.2) from initiating any refueling operation,
- determining, based on second information received from the particular vehicle (10.2), that the particular vehicle (10.2) is ready for a refueling operation,
- in response to said determining that the particular vehicle (10.2) is ready for a refueling operation, activating the particular fuel pump (14.2) for the refueling operation.

2. The method of claim 1, wherein the first information comprises an identification of the particular vehicle (10.2) or a person associated with the particular vehicle (10.2).

3. The method of claim 1 or claim 2, wherein said determining that the particular vehicle (10.2) approaches the filling station (12) is based on determining that the particular vehicle (10.2) approaches or crosses or has just passed a geo-fence (20) associated with the filling station (12).

4. The method of any of claims 1-3, wherein said designating a particular fuel pump (14.2) selects a particular fuel pump (14.2) which is currently not engaged in a refueling operation.

5. The method of any of claims 1-4, wherein said blocking the particular fuel pump (14.2) from initiating any refueling operation comprises causing the particular fuel pump (14.2) to display a notification.

6. The method of any of claims 1-5, further comprising, in response to said designating a particular fuel pump (14.2), sending a guidance message to the particular vehicle (10.2) or to a mobile device (46) associated with the particular vehicle (10.2), wherein the guidance message indicates the particular fuel pump (14.2).

7. The method of any of claims 1-6, wherein the second information comprises ignition information which indicates an operational status of an ignition of the particular vehicle (10.2).

8. The method of any of claims 1-7, wherein said determining that the particular vehicle (10.2) is ready for a refueling operation is based on determining an event of turning off an ignition of the particular vehicle (10.2) or a status that the ignition of the particular vehicle (10.2) has been turned off within a predetermined time interval.

9. The method of any of claims 1-8, wherein said determining that the particular vehicle (10.2) is ready for a refueling operation is based on determining that the particular vehicle (10.2) has been brought to a standstill.

10. The method of any of claims 1-9, further comprising receiving a message from the particular fuel pump (14.2) indicating that the refueling operation has ended.

11. The method of any of claims 1-10, further comprising determining, based on third information received from the particular vehicle (10.2), that an increased amount of fuel in a tank of the particular vehicle (10.2) corresponds, within a permissible margin of error, to an amount of fuel dispensed by the particular fuel pump (14.2).

12. The method of any of claims 1-11, further comprising triggering a payment process.

13. A machine-readable medium or multiple machine-readable media having program instructions stored thereon, wherein the program instructions are adapted to cause one or more one or more servers (22, 26.x), when executing the program instructions, to perform operations including the operations recited in any of claims 1-12.

14. A server installation (28) comprising one or more servers (22, 26.x), wherein the server installation (28) is adapted to perform operations including the operations recited in any of claims 1-12.

15. A system comprising a filling station (12) and one or more back-end servers (26.x), the system being adapted to perform operations including the operations recited in any of claims 1-12.
